# EUROPÄISCHE PATENTSCHRIFT

(11) **EP 2 827 206 B1**
(45) Veröffentlichungstag und Bekanntmachung des Hinweises auf die Patenterteilung: **04.09.2019**
(21) Anmeldenummer: 14176943.0
(22) Anmeldetag: 14.07.2014
(51) Int. Cl.: G05B 19/401, B23Q 15/22

(54) **Verfahren und Vorrichtung zur Erfassung eines Profils eines stangen- oder rohrförmigen Werkstücks sowie Bearbeitungsmaschine mit einer derartigen Vorrichtung**
Method and device for detecting a profile of a rod-shaped or tubular workpiece and processing machine with such a device
Procédé et dispositif de détection d'un profilé d'une pièce tubulaire ou de type tige forme de barre et machine d'usinage doté d'un tel dispositif

(30) Priorität: 18.07.2013 DE 102013107639
(43) Veröffentlichungstag der Anmeldung: 21.01.2015
(73) Patentinhaber: TRUMPF Werkzeugmaschinen GmbH + Co. KG, 71254 Ditzingen (DE)
(72) Erfinder: Magg, Winfried, 71254 Ditzingen (DE)
(74) Vertreter: Maser, Jochen

(56) Entgegenhaltungen:
- DE-A1- 2 941 815
- DE-A1-102008 024 806
- DE-A1-102009 057 816
- DE-U1-202012 104 268

## Beschreibung

Die Erfindung betrifft ein Verfahren und eine Vorrichtung zur Erfassung einer Profilfläche eines stangen- oder rohrförmigen Werkstücks, welches während einem Beladevorgang von Werkstücken von einer Beladeeinheit in eine Bearbeitungseinrichtung mit einem Zuführelement erfasst wird.

Aus der EP 1 516 696 A1 ist eine Bearbeitungsmaschine für stangen- oder rohrförmige Werkstücke bekannt, welche eine Bearbeitungseinrichtung in Form einer Laserschneidstation, eine Zuführvorrichtung für die zu bearbeitenden Werkstücke sowie eine der Laserschneidstation nachgeschaltete Ausschleusstation umfasst. Die Zuführvorrichtung umfasst eine Beladeeinheit, in welcher die zu bearbeitenden Werkstücke bereitgestellt und an eine als Dreh- und Vorschubstation ausgebildete Werkstückhalterung übergeben werden. Mittels der Dreh- und Vorschubstation werden die zu bearbeitenden Werkstücke gegenüber dem Laserschneidkopf der Laserschneidstation in der für die Bearbeitung erforderlichen Weise bewegt.

Diese Zuführvorrichtung umfasst eine Erfassungseinrichtung, durch welche sowohl die Länge des zu bearbeitenden Werkstückes als auch dessen Verlauf entlang der Längsachse gegenüber einem Soll-Verlauf erfassbar ist.

Aus der DE 20 2012 104 268 U1 ist ein Verfahren zur automatisierten Vereinzelung für die nicht magazinierten Profile bekannt. Vor einer Entnahme eines Profils aus einem Transportbehälter, in welchem mehrere Profile aufgenommen sind, wird mit einer Kamera ein Bild der Profile im Transportbehälter aufgenommen. Eine Beleuchtung wird auf die Profile gerichtet, so dass die Schnittkanten der Profile hell abgebildet sind. Aus allen im Bild erkannten Profilen wird das nächste zu greifende Profil ausgewählt, welches den größten y-Wert aufweist, also welches am weitesten gegenüber den anderen Profilen aus dem Behälter hervorsteht. Dabei werden von einem Teilbereich der Schnittkanten Breitenkomponenten x₁ bis xₙ und Höhenkomponenten y₁ bis yₙ erfasst. Darauf folgend wird das Profil mit der höchsten Höhenkomponente für die nächste Entnahme ausgewählt. Anschließend erfolgt eine Kollisionsprüfung mit benachbarten Profilen, bevor die Daten für die Entnahme des Profils aus dem Transportbehälter an einen Roboter übergeben werden.

Aus der US 2011/0276171 A1 ist des Weiteren eine Vorrichtung zur Erfassung einer Länge von Rohren bekannt. Vor dem Anordnen des Rohres in einer Bearbeitungsmaschine wird dieses vermessen, um das Bearbeitungsprogramm an Abweichungen des Rohres von einer Sollform anzupassen.

Aus der US 5,267,381 ist eine Bearbeitungsmaschine für rohrförmige Werkstücke bekannt. Um eine Bearbeitungsqualität einer stirnseitigen Schnittstelle am Werkstückt zu überprüfen, wird die Stirnfläche der Stirnseite mittels eines Lasers abgetastet, um somit ein Höhenprofil von der Stirnfläche des Werkstücks erstellen und die Bearbeitungsqualität der Schnittstelle überprüfen zu können.

Zur Erhöhung der Bearbeitungsqualität ist es erforderlich, zumindest die Einspannorientierung und/oder das Profil eines zu bearbeitenden Werkstücks während des Beladeprozesses an Bearbeitungsmaschinen zu ermitteln, um eine exakte Einspannung für eine nachfolgende Bearbeitung und einen prozesssicheren Ablauf der Bearbeitung zu gewährleisten.

Der Erfindung liegt die Aufgabe zugrunde, ein Verfahren und eine Vorrichtung zur Erfassung eines Profils eines stangen- oder rohrförmigen Werkstücks zu schaffen, wodurch zumindest eine Lage, Form, Toleranz und/oder Einspannorientierung eines rohr- oder stangenförmigen Werkstücks erfasst wird. Des Weiteren liegt der Erfindung die Aufgabe zugrunde, eine Bearbeitungsmaschine vorzuschlagen, welche Werkstücke unterschiedlicher Geometrie und Größe anhand des Ist-Profils des Werkstücks flexibel und prozesssicher bearbeitet.

Die der Erfindung zugrunde liegende Aufgabe wird durch ein Verfahren zur Erfassung einer Profilfläche eines stangen- oder rohrförmigen Werkstücks gelöst, bei dem eine von einer Beleuchtungseinrichtung ausgesandte Strahlung in einem Einfallswinkel auf eine Stirnseite des Werkstücks gerichtet wird, so dass von einer an der Stirnseite des Werkstücks direkt reflektierten Strahlung durch die Bilderfassungseinrichtung ein Bild erfasst wird, und aus dem erfassten Bild mit einem Auswerteverfahren ein Verlauf einer die Profilfläche umrandenden Konturlinie ausgewertet wird. Durch die Erfassung der gesamten Profilfläche von der Stirnseite des stangen- oder rohrförmigen Werkstücks kann die die Profilfläche vollständig umrandende Konturlinie ermittelt werden, um daraus verschiedene geometrische Informationen, beispielsweise die Form und/oder die Lage des Profils von dem zu bearbeiteten Werkstück und somit dessen Ausrichtung zu erfassen. Diese Informationen können bei den nachgelagerten Bearbeitungsprozessen einfließen, berücksichtigt und gegebenenfalls korrigiert werden, wodurch die Prozesssicherheit und die Bearbeitungsqualität erhöht wird. Durch die Erfassung der gesamten Profilfläche des Werkstücks mittels der direkt reflektierten Strahlung beziehungsweise dem Direktreflex der Strahlung von der Profilfläche der Stirnseite des Werkstücks kann das Bild mit hohen Kontrastverhältnissen aufgenommen werden, auf dem sich die gesamte Stirnfläche als helle Fläche scharf gegenüber der Umgebung und/oder Profilinnen- oder Außenflächen als dunkle Flächen abgrenzt. Durch einen sehr hohen Kontrast wird eine exakte Messung ermöglicht.

Die aus dem Bild von der Stirnseite des Werkstücks ermittelte, die Profilfläche umrandende Konturlinie wird vorteilhafterweise mit einem pattern-matching-Auswerteverfahren durch Vergleich mit einer Sollkonturlinie ausgewertet. Dadurch können zumindest eine Position und/oder Winkellage und/oder Orientierung des Werkstücks ermittelt und mit einer Sollposition und/oder Sollwinkellage und/oder Sollorientierung verglichen werden.

Des Weiteren kann aus dem von der Stirnseite des Werkstücks durch die Bilderfassungseinrichtung erfassten Bild eine Istkontur der Profilfläche ermittelt und durch Vergleich mit einer Sollkontur ausgewertet werden. Dabei können zumindest die Wandstärke, ein Radius und/oder eine Geradheit oder dergleichen überprüft werden.

Des Weiteren ist bevorzugt vorgesehen, dass die von der Stirnseite des Werkstücks ermittelte Profilfläche als Grundlage bzw. als neue Sollkonturdaten für nachfolgende Bearbeitungsschritte einem Bearbeitungsprogramm bereitgestellt und übernommen wird. Dazu kann die Abweichung der ermittelten Profilkoordinaten von den im Bearbeitungsprogramm enthaltenen Werkstückdaten bestimmt und zur Korrektur des Bearbeitungsprogramms genutzt werden. Außerdem kann anhand der gemessenen Konturdaten ein vollständig neues Bearbeitungsprogramm erzeugt werden. Dadurch sind die Qualität der Bearbeitung des Werkstücks und die Prozesssicherheit erhöht. Es ist außerdem möglich, dass die Maschinensteuerung anhand der aufgenommenen Istkontur des Werkstücks ein passendes Bearbeitungsprogramm zur Bearbeitung des Werkstücks auswählt. Auf diese Weise können verschieden geformte Werkstücke unsortiert und in beliebiger Reihenfolge der Bearbeitungsstation zugeführt werden. Durch Ermittlung der Werkstück-Profilfläche wird das Werkstück identifiziert und das richtige Bearbeitungsprogramm ausgewählt.

Bevorzugt ist vorgesehen, dass eine optische Achse der Kamera in oder nahe einer Längsachse des Werkstücks positioniert und vorzugsweise mit einem Abstand zur Stirnseite des Werkstücks positioniert wird, so dass eine Stirnseite des Werkstücks innerhalb einer Apertur der Kamera liegt. Dadurch kann eine optimale Ausrichtung der Bilderfassungseinrichtung zur Stirnseite für eine hohe Auflösung und scharfe Kontraste erzielt werden.

Des Weiteren ist bevorzugt vorgesehen, dass die Beleuchtungseinrichtung eine ringförmige, insbesondere homogene Strahlung erzeugt, welche mit einem Einfallswinkel auf die Stirnseite des Werkstücks gerichtet wird, so dass der Ausfallswinkel der direkt an der Stirnfläche reflektierten Strahlung innerhalb der Apertur der Bilderfassungseinrichtung liegt. Bevorzugt ist eine ringförmige Beleuchtungseinrichtung vorgesehen, welche koaxial zum Werkstück positioniert wird. Vorteilhafterweise ist innerhalb der ringförmigen Beleuchtungseinrichtung die Bilderfassungseinrichtung positioniert, welche in der Längsachse des Werkstücks liegt. Dadurch können wiederum besonders gute Kontrastverhältnisse geschaffen werden. Das von der Stirnseite des Werkstücks erfasste Bild wird somit ausschließlich durch die direkt reflektieren Strahlen erzeugt.

Das Bild von einer Stirnseite des Werkstücks kann von der Bilderfassungseinrichtung bevorzugt mit einer geringen Schärfentiefe erfasst werden. Dies weist den Vorteil auf, dass die Profilfläche quasi mit einer gleichmäßigen Ausleuchtung erfasst werden kann. Dadurch werden verbesserte Kontrastübergänge im Bild erreicht, wodurch die Auswertung der Konturlinien einfach und präziser erfolgen kann.

Eine weitere vorteilhafte Ausführungsform des Verfahrens sieht vor, dass die Aufnahme eines Bildes von der Stirnseite des Werkstückes mittels einer Differenzmessung erfolgt. Dabei kann beispielsweise ein Differenzbild der Stirnseite des Werkstücks mit und ohne Beleuchtung erzeugt werden. Alternativ kann ein Differenzbild mit und ohne Werkstück bei eingeschalteter Beleuchtung der Beleuchtungseinrichtung erzeugt werden, um somit die direkt reflektierten Strahlen auszuwerten. Durch eine solche Differenzmessung können Fremdlichteinflüsse oder ungewollte Reflexionen eliminiert werden.

Beispielsweise kann vorgesehen sein, dass die rotatorische Ausrichtung des Werkstücks in einem Zuführelement der Zuführeinrichtung bei einer Übergabe an eine Dreh- und Vorschubeinrichtung bestimmt wird, und dass bei einer Übergabe des Werkstücks an eine Spannvorrichtung der Bearbeitungsmaschine eine Korrekturdrehung zur Ausrichtung der Spannvorrichtung angesteuert wird. Es folgt also eine definierte Übergabe mittels dem Zuführelement an die Spannvorrichtung, wobei aufgrund der zuvor erfassten Profilfläche des Werkstücks die Orientierung des Werkstücks im Zuführelement ermittelt wird, so dass die Abweichung bezüglich der Ist-Lage von der Soll-Lage bei Übergabe an die Dreh- und Vorschubeinrichtung ausgeglichen wird.

Alternativ oder ergänzend hierzu kann eine axiale Ausrichtung des Werkstücks in einer Übergabeposition eines Zuführelementes einer Zuführeinrichtung in der Bearbeitungsmaschine zur Bearbeitung des Werkstücks zu einer Spannvorrichtung der Bearbeitungsmaschine aus den Konturlinien der Profilfläche des Werkstücks bestimmt werden. Sofern beispielsweise ein Versatz der Spannachse der Spannvorrichtung zur Längsmittelachse des Profils im Übergabepunkt des Zuführelementes zur Spannvorrichtung bestehen sollte, wird ein linearer Verfahrweg des Zuführelementes angesteuert, um das Werkstück auf die Spannmitte der Spannvorrichtung der Dreh- und Vorschubeinrichtung auszurichten.

Die der Erfindung zugrunde liegende Aufgabe wird des Weiteren durch eine Vorrichtung zur Erfassung einer Profilfläche eines stangen- oder rohrförmigen Werkstücks gelöst, welche insbesondere während eines Beladevorgangs des Werkstücks mit einem Zuführelement von einer Beladeeinheit in eine Bearbeitungsmaschine erfasst wird, wobei die Beleuchtungseinrichtung derart ausgebildet ist, dass diese eine Strahlung mit einem Einfallswinkel auf die Stirnseite des Werkstücks richtet und die gesamte Stirnfläche ausleuchtet, so dass eine an der Stirnseite des Werkstücks direkt reflektierte Strahlung in Richtung auf eine optische Achse der Bilderfassungseinrichtung gerichtet ist und die reflektierte Strahlung als Bild erfassbar ist und ein von der Bilderfassungseinrichtung aufgenommenes Bild der direkt reflektieren Strahlung mit einem Auswerteverfahren in einer Auswerteeinrichtung zur Ermittlung einer die Profilfläche des Werkstücks begrenzenden oder umrandenden Konturlinie auswertbar ist. Durch eine solche Vorrichtung beziehungsweise Sensorik kann die Lage, also der Winkel und/oder die Position, des Werkstücks, die Form, die Toleranz und/oder die Einspannorientierung eines Werkstücks erfasst und bei der Weiterverarbeitung des Werkstücks berücksichtigt werden.

Die Beleuchtungseinrichtung ist bevorzugt als Beleuchtungsring ausgebildet, welcher mehrere in konzentrischen Ringen angeordnete Beleuchtungsquellen aufweist. Dadurch wird ermöglicht, dass in Abhängigkeit der Durchmessergröße von stangen- oder rohrförmigen Werkstücken oder eines Außenumfangs von offen oder geschlossenen Profilen ein soleher Ring der Beleuchtungsquelle eingeschalten wird, der größer als der Außendurchmesser oder Außenumfang des zu prüfenden Werkstücks ist. Bevorzugt sind die Beleuchtungsquellen aus LEDs gebildet.

Die Beleuchtungsquellen der Beleuchtungseinrichtung sind bevorzugt gegenüber einer optischen Achse der Bilderfassungseinrichtung auf diese zugeneigt. Dadurch kann erzielt werden, dass der Direktreflex beziehungsweise die direkt von der Stirnseite des Werkstücks reflektierte Strahlung innerhalb der Apertur der Bilderfassungseinrichtung liegt. Dadurch können höhere Kontraste und somit eine verbesserte Auswertung zur Ermittlung der Profilfläche des Werkstücks erzielt werden.

Alternativ kann vorgesehen sein, dass die Beleuchtungseinrichtung einen ringförmigen Reflektor aufweist, der eine von außen beziehungsweise außerhalb des Werkstücks auf den Reflektor gerichtete Strahlung auf eine Stirnseite des Werkstücks reflektiert. Dadurch kann beispielsweise eine punktförmige Lichtquelle eingesetzt werden, deren Strahlung über entsprechende Blenden zum ringförmigen Reflektor gelangt.

Die Längsmittelachse des Werkstücks, eine optische Achse der Bilderfassungseinrichtung und eine mittlere Strahlachse der Beleuchtungseinrichtung sind bevorzugt in einer gemeinsamen Achse angeordnet. Dadurch können günstige optische Verhältnisse und ein einfacher Aufbau der Vorrichtung geschaffen werden.

Die Vorrichtung zur Erfassung einer Profilfläche eines Werkstücks kann eine Bilderfassungseinrichtung mit einer Kamera und einem Kameraobjektiv umfassen, wobei das Kameraobjektiv Linsen aufweist, die in Abhängigkeit vom Durchmesser des Werkstücks in Richtung der optischen Achse der Bilderfassungseinrichtung bewegbar und bezüglich dieser Bewegung mit einer Steuerung ansteuerbar sind. Dadurch kann eine automatische Anpassung der Apertur an einen Durchmesser des Werkstücks erfolgen, wodurch eine schnelle Bilderfassung möglich wird.

Die Bilderfassungseinrichtung und die Beleuchtungseinrichtung sind bevorzugt in einer optischen Schutzeinrichtung angeordnet, welche eine Öffnung oder Ausnehmung aufweist, in die die zu erfassende Stirnseite des Werkstücks einsetzbar oder einsteckbar ist. Durch eine solche optisehe Schutzeinrichtung, wie eine Schutzkabine, eine Kammer oder ein Schutzvorhang, können Fremdstrahlen eliminiert werden.

Vorteilhafterweise ist die Öffnung oder Ausnehmung in der Größe an den Querschnitt beziehungsweise Außenumfang des Werkstücks anpassbar. Dadurch kann eine Eliminierung von Störeinflüssen - wie Fremdstrahlen - weiter verbessert werden.

Die der Erfindung zugrunde liegende Aufgabe wird des Weiteren durch eine Bearbeitungsmaschine für stangen- oder rohrförmige Werkstücke gelöst, welche mit einem Zuführelement einer Zuführeinrichtung das Werkstück aus einer Entnahmeposition in einer Beladeeinheit entnimmt und in eine Übergabeposition an eine Spannvorrichtung übergibt, wobei vor, während oder nach einer Verfahrbewegung zwischen der Entnahmeposition und der Übergabeposition eine Profilfläche des zu bearbeitenden Werkstücks mit einer Vorrichtung zur Erfassung eines Profils von stangen- oder rohrförmigen Werkstücken erfassbar ist. Dadurch können unmittelbar vor der Übergabe des Werkstücks in die Dreh- und Vorschubstation zur anschließenden Bearbeitung die Daten der Profilfläche des Werkstücks erfasst, und das Werkstück exakt ausgerichtet und übergeben beziehungsweise übergeben und ausgerichtet werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer Bearbeitungsanlage zum Bearbeiten von stangen- oder rohrförmigen Werkstücken,
- Figur 2: eine weitere perspektivische Ansicht der Bearbeitungsmaschine gemäß Figur 1,
- Figur 3: eine schematische Schnittdarstellung einer Vorrichtung zur Erfassung eines Profils eines stangen- oder rohrförmigen Werkstücks,
- Figur 4: eine schematische Darstellung eines von der Stirnseite des Werkstücks erfassten Bildes mit einer Bilderfassungseinrichtung und
- Figur 5: eine schematische Darstellung zur Erläuterung der Funktionsweise der Bearbeitungsmaschine.

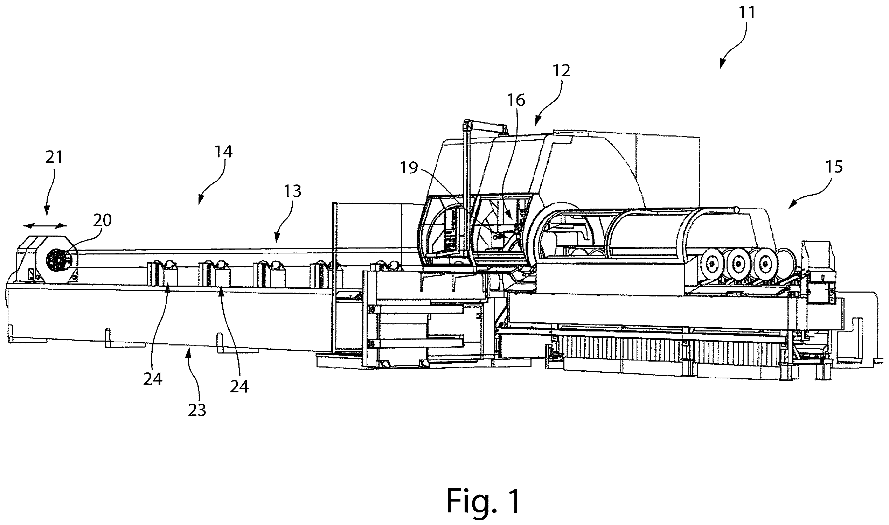

In Figur 1 ist perspektivisch eine Bearbeitungsmaschine 11 zum schneidenden Bearbeiten von rohr- oder stangenförmigen Werkstücken 13 dargestellt. Unter rohr- oder stangenförmigen Werkstücken 13 werden längliche Körper verstanden, deren Länge in der Regel wesentlich größer als ihr Querschnitt ist und die aus einem im Wesentlichen unflexiblen Material gefertigt sind. Solche Werkstücke 13 können beliebige offene oder geschlossene Querschnittsformen und/oder Profile aufweisen, wobei am Gebräuchlichsten Rund- oder Rechteckrohre sind.

Die Bearbeitungsmaschine 11 umfasst zur Bearbeitung der Werkstücke 13 eine Bearbeitungsstation 12, insbesondere eine Laserschneidstation sowie eine Zuführeinrichtung 14 und eine Ausschleusstation 15. An der Laserschneidstation 12 ist ein Laserschneidkopf 16 vorgesehen, mit dem die Werkstücke 13 in nicht näher dargestellten Rohrteilstücke abgelenkt und/oder zusätzlich bearbeitet werden. Die Werkstücke 13 werden nahe der Bearbeitungsstelle in einem Durchschiebespannfutter 19 gelagert. Gegenüberliegend ist das Werkstück 13 in einer Dreh- und Vorschubeinrichtung 21 aufgenommen, welche gegenüber dem Laserschneidkopf 16 in der Laserschneidstation 12 in der für die Bearbeitung erforderlichen Weise entlang eines Maschinengrundgestells 23 verfahrbar ist. Im Einzelnen werden die zu bearbeitenden Werkstücke 13 mittels der Dreh- und Vorschubstation 11 gegenüber dem Laserschneidkopf 16 in Rohrlängsrichtung nachgesetzt und zur Erstellung eines Trennschnittes um die Rohrlängsachse gedreht. Zwischen der Dreh- und Vorschubeinrichtung 21 und dem Durchschiebespannfutter 19 sind die Werkstücke 13 auf Rohrunterstützungen 24 gelagert. Mit fortschreitender Rohrwerkstückbearbeitung werden die Rohrunterstützungen 24 in das Maschinengestell 23 abgesenkt und können dann von der Dreh- und Vorschubeinrichtung 21 überfahren werden.

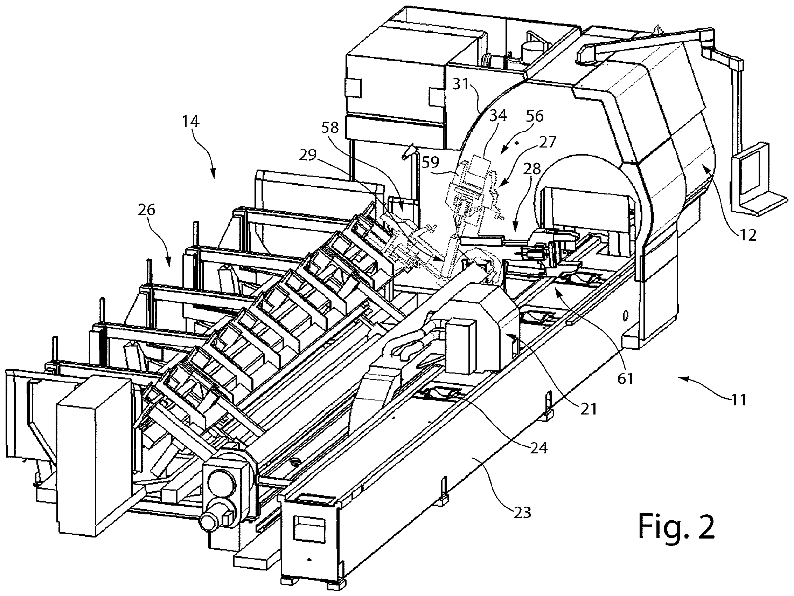

Die Figur 2 zeigt eine weitere perspektivische Ansicht auf die Bearbeitungsmaschine 11 gemäß Figur 1. Dem Maschinengestell 23 ist die Zuführeinrichtung 14 zugeordnet, welche eine Beladeeinheit 26 umfasst. Diese Beladeeinheit 26 kann als Magazin mit einer zusätzlichen Vereinzelungseinrichtung ausgebildet sein. Als weitere Komponente der Zuführeinrichtung14 sind eine oder mehrere Greifvorrichtungen 27 als Zuführelement 28 vorgesehen, um das Werkstück 13 von der Beladeeinheit 26 zu entnehmen und an die Dreh- und Vorschubeinrichtung 21 zu übergeben, welche ebenfalls eine Komponente der Zuführeinrichtung 14 darstellt.

Die Greifvorrichtung 27 umfasst Greifer 59, welche beispielsweise auf verfahrbaren Schlitten angeordnet sind, so dass sie entlang der gesamten Länge der Beladeeinheit 26 verfahrbar sind. Dadurch können die Werkstücke 13 unabhängig von deren Länge aufgenommen und an die Dreh- und Vorschubeinrichtung 21 übergeben werden. Bevorzugt ist eine Schwenkbewegung des Zuführelementes 28 vorgesehen. Alternativ können auch weitere Handhabungseinrichtungen und/oder Verfahrbewegungen vorgesehen sein, um ein Umsetzen der Werkstücke 13 von der Beladestation 26 in die Dreh- und Vorschubeinrichtung 21 zu ermöglichen.

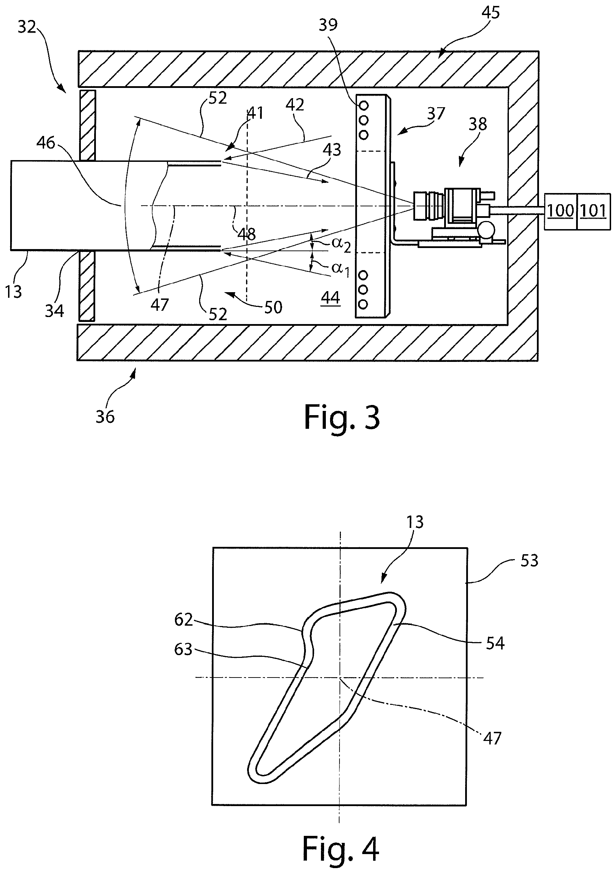

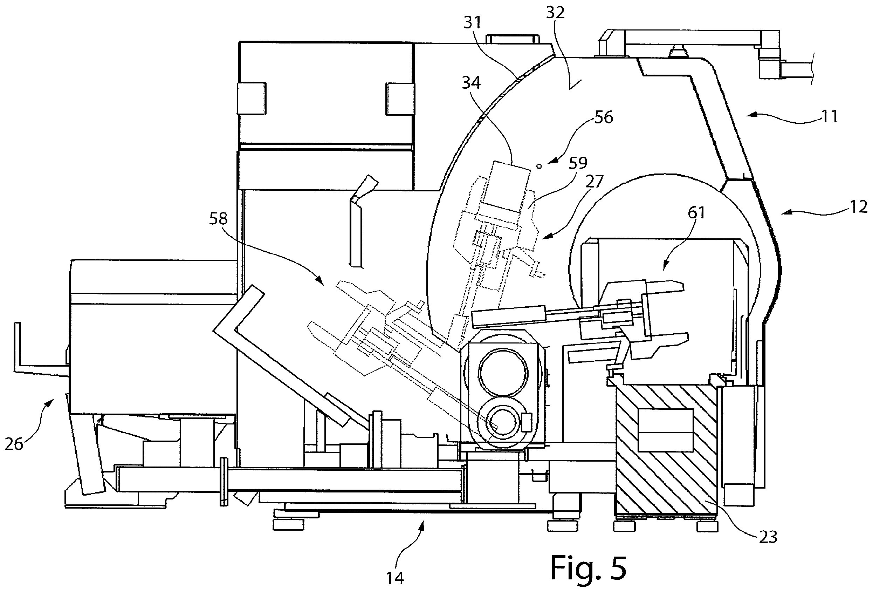

Die Bearbeitungsstation 12 umfasst ein Gehäuse 31, in welchem eine Steuerung der Bearbeitungsstation sowie die einzelnen Bauteilkomponenten zur Bildung einer Laserschneidstation angeordnet sind. In einer Stirnseite 32 des Gehäuses 31 ist beispielsweise eine Öffnung 34 vorgesehen, die Teil einer Vorrichtung 36 zur Erfassung eines Profils des Werkstücks 13 ist, die anhand Figur 3 erläutert wird. Die Positionierung der Öffnung 34 im Gehäuse 31 kann beispielsweise an eine Schwenkbewegung des Zuführelementes 28 angepasst sein, auf welche nachfolgend in Figur 5 noch näher Bezug genommen wird.

Alternativ kann die Vorrichtung 36 zur Erfassung einer Profilfläche 54 des Werkstücks 13 auch an einer Außenseite der Seitenwand des Gehäuses 13 befestigt sein. Ebenso kann die Vorrichtung 36 auch an dem von der Bearbeitungsstation 12 entfernten Ende des Maschinengestells 23 angeordnet sein.

In Figur 3 ist eine schematische Schnittansicht der Vorrichtung 36 zur Erfassung der Profilfläche 54 des Werkstücks 13 dargestellt. Diese Vorrichtung 36 umfasst eine Beleuchtungseinrichtung 37 sowie eine Bilderfassungseinrichtung 38, die einander zugeordnet sind, so dass diese einer Stirnseite 41 des Werkstücks 13 gegenüber liegend zugeordnet sind. Die Vorrichtung 36 umfasst vorteilhafterweise eine einen Beleuchtungsraum 44 bildende Schutzvorrichtung 45, mit einer Öffnung 34 zum Positionieren oder Einführen einer Stirnseite 41 des Werkstücks 13. Der Beleuchtungsraum 44 ist mit Ausnahme der Öffnung 34 vollständig von der Schutzvorrichtung 45 umgeben, so dass von außen keine Störeinflüsse, wie beispielsweise ein Fremdlicht, in den Beleuchtungsraum 44 eintreten kann. Eine solche Schutzvorrichtung 45 kann innerhalb eines Gehäuses 31 der Laserschneidstation 12 angrenzend an die Öffnung 34 positioniert werden.

Die Beleuchtungseinrichtung 37 ist ringförmig ausgebildet und weist vorzugsweise mehrere konzentrisch zueinander angeordnete Ringe aus Beleuchtungsquellen (39), insbesondere LEDs, auf. Diese Beleuchtungsquellen (39) sind bevorzugt in Richtung auf eine optische Achse 48 der Bilderfassungseinrichtung 38 geneigt. Ein Innendurchmesser der ringförmigen Beleuchtungseinrichtung 37 ist bevorzugt derart bemessen, dass dieser gleich oder größer als der größte Außenumfang eines Profils der zu erfassenden Werkstücke 13 ist. Die Beleuchtung der Profilfläche 54 soll möglichst gleichmäßig (homogen) erfolgen, da dies zur Prozesssicherheit bei der Auswertung eines aufgenommenen Bildes 53 (Figur 4) beiträgt. Um eine homogene Ausleuchtung zu erreichen, sind die Beleuchtungsquellen (39) mit möglichst hoher Dichte angeordnet. Außerdem ist es vorteilhaft, wenn der Schärfentiefebereich bei der Bilderfassung klein ist. Eine geringe Schärfentiefe des aufgenommenen Bildes 53 kann beispielsweise durch eine große Blendenöffnung der Bilderfassungseinrichtung 38 erreicht werden.

Eine mittlere Strahlachse der Beleuchtungseinrichtung 37 liegt vorteilhafterweise in der optischen Achse 48 der Bilderfassungseinrichtung 38. Der Abstand der Bilderfassungseinrichtung 38 zur Messebene 50, welche durch die Stirnseite 41 des Werkstücks 13 gebildet wird, ist von der Größe des Profils des zu erfassenden Werkstücks 13 abhängig. Die Bilderfassungseinrichtung 38 kann mit einer Steuerung 100, welche zumindest die aktuelle Bildschärfe auswertet, derart verfahren werden beziehungsweise die Optik der Bilderfassungseinrichtung kann z.B. durch Verschieben von Objektivlinsen derart verändert werden, dass die Brennweite, die Fokuslage und die Blende auf den Durchmesser beziehungsweise den Außenumfang des Profils des zu erfassenden Werkstücks 13 angepasst wird. Das Werkstück 13 wird bevorzugt in der Messebene 50 mit dessen Stirnseite 41 positioniert, so dass diesbezüglich gleichbleibende Ausgangsbedingungen für die Erfassung einer Stirnseite 41 des Werkstücks 13 gegeben sind.

Die Bilderfassungseinrichtung 38 ist in der optischen Achse 48 positioniert. Die Stirnseite 41 des Werkstücks 13 liegt innerhalb der durch die Apertur 46 der Bilderfassungseinrichtung 38 fiktiv gebildeten Linien 52.

Die Bilderfassungseinrichtung 38 kann eine digitale Kamera, insbesondere eine CCD- oder CMOS-Kamera sein.

Zur Profildetektion des Werkstücks 13 wird ein Beleuchtungsring der Beleuchtungseinrichtung 37 eingeschalten, der größer als der Außenumfang der Stirnseite 41 des Werkstücks 13 ist. Die ausgesandte Strahlung 42 wird in einem Einfallswinkel α₁ auf die Stirnseite 41 gerichtet und an der Stirnseite 41 mit einem Ausfallswinkel α₂ reflektiert, so dass ein Direktreflex erzeugt wird und die als Direktreflex reflektierte Strahlung 43 von der Bilderfassungseinrichtung 38 als Bild 53 erfasst wird, wie Figur 4 beispielhaft zeigt.

Da es sich bei den Werkstücken 13 zumeist um metallische Werkstücke handelt, die eine glatte und im Wesentlichen senkrecht zur optischen Achse 48 beziehungsweise zur Längsachse des Werkstücks 13 ausgerichtete Stirnfläche 41 aufweisen, kann das Bild 53 von der direkt und nicht diffus reflektierten Strahlung 43 (Direktreflex) mit hohen Kontrastverhältnissen zur Umgebung beziehungsweise zur angrenzenden Innen- und Außenfläche des Werkstücks 13 erfasst werden. Durch die Ausrichtung der Beleuchtungsrichtung 37 kann erzielt werden, dass der Ausfallswinkel α₂ des Direktreflexes, welcher von dem Einfallwinkel α₁ der Strahlung 42 der Beleuchtungsquelle auf die Stirnseite 41 des Werkstücks 13 bestimmt ist, innerhalb der Apertur 46 der Bilderfassungseinrichtung 38 liegt und somit der Kontrast verstärkt wird.

Die von der Bilderfassungseinrichtung 38 erfassten Bilder 53 bzw. Daten werden an eine Auswerteeinrichtung 101 weitergeleitet, um eine Bildauswertung zur Ermittlung der Konturen der Profilfläche 54 durchzuführen.

Beispielsweise kann von einer Stirnseite 41 des Werkstücks 13 das Bild 53 gemäß Figur 4 erfasst werden, wobei die Profilfläche 54 des Werkstücks 13 als helle Fläche und die Umgebung als dunkle Fläche erscheint. Die Profilfläche 54 wird durch Konturlinien 62, 63 umrandet, welche den stirnseitigen Körperkanten des Werkstücks 13 entsprechen. Aufgrund des hohen Kontrastes kann die Kontur der Profilfläche 54 exakt durch ein Bildauswerteverfahren mit Hilfe von Bildauswerte-Algorithmen ausgewertet werden, so dass sich daraus verschiedene Messdaten z.B. mit einem pattern-matching-Verfahren ableiten lassen. Als Messdaten können beispielsweise die Lage, das heißt die Position und der Winkel des Werkstücks, sowie die Geometriegrößen, insbesondere die Wandstärke, Radien, und Winkel, und Formtoleranzen und Formabweichungen erfasst werden. Dadurch kann sowohl eine exakte Ausrichtung des Werkstücks 13 in einer Messposition 56 in der Vorrichtung 36 erfasst werden als auch gegebenenfalls vorliegende Abweichungen in der Geometrie und der Form des Werkstücks 13.

In Figur 5 ist eine schematische Seitenansicht von links auf die Bearbeitungsmaschine 11 gemäß Figur 1 dargestellt. Das zu bearbeitende Werkstück 13 ist in einer Entnahmeposition 58 in der Beladeeinheit 26 bereit gestellt. Das Zuführelement 28 nimmt in einer definierten Position mit einem Greifer einer Greifvorrichtung 27 das Werkstück 13 auf und führt dieses in eine Messposition 56 über, in der die Stirnseite 41 des Werkstücks 13 zur Ermittlung der Profilfläche 54 des Werkstücks 13 erfasst wird. Anschließend wird das zu bearbeitende Werkstück 13 mit dem Zuführelement 28 in eine Übergabeposition 61 übergeführt, in der das Werkstück 13 durch die Spannvorrichtung 20 der Dreh- und Vorschubstation 21 aufgenommen wird.

Die Erfassung der Profilfläche 54 des zu bearbeitenden Werkstücks 13 kann bereits in der Entnahmeposition 58 nach der definierten Aufnahme des Werkstücks 13 durch das Zuführelement 28 erfolgen. Ebenso kann das Erfassen der Stirnfläche 41 des Werkstücks 13 entlang eines Verfahrweges von der Entnahmeposition 58 in die Übergabeposition 61 als auch in der Übergabeposition 61 vor der einspannenden Aufnahme durch die Spannvorrichtung 20 erfolgen.

Aus dem Bild 53, welches von der Stirnseite 54 des Werkstücks 13 erfasst wurde, kann bspw. eine umrandende Konturlinie 62 und/oder 63 erfasst werden und diese Konturlinie 62, 63 mit einer Sollkontur verglichen werden. Dabei wird bspw. die Sollkontur so übereinstimmend wie möglich auf die Istkontur gelegt und durch insbesondere ein pattern-matching-Auswerteverfahren miteinander verglichen, so dass daraus die Position und/oder Winkellage von dem aufgenommenen Werkstück 13 ermittelt werden kann. Des Weiteren kann aus dem Bild 53 durch die Erfassung beider Konturlinien 62, 63 unmittelbar daraus die Wandstärke, Krümmungsverläufe des Profils oder dgl. erfasst werden. Die Istkontur kann also erfasst und mit einer Sollkontur verglichen werden.

Somit können ausgehend von zumindest einer erfassten Konturline 62, 63 mittels der Auswerteeinrichtung 101 Messdaten erfasst werden, durch welche die Lage und/oder Position und/oder Wandstärke und/oder Radius und/oder Geradheit und/oder Formtoleranz sowie weitere Geometrieinformationen bestimmt werden können.

Die anhand der Profilfläche 54 der Stirnseite 41 des Werkstücks 13 ermittelten Ist-Werte der Werkstückgeometrie werden für das nachfolgende Bearbeitungsprogramm bereitgestellt. Darüber hinaus kann anhand der gemessenen Ist-Werte des Werkstücks 13 eine neue Sollkontur des Werkstücks 13 aus den Messdaten erzeugt und diese dem nachgelagerten Bearbeitungsprozess zur Verfügung gestellt werden, um das Bearbeitungsprogramm an die reale Werkstückgeometrie anzupassen. Des Weiteren kann während der Übergabe des Werkstücks 13 an die Dreh- und Vorschubstation 21 eine Korrektur erfolgen, indem beispielsweise die Spannvorrichtung 20 anhand der gemessenen Ausrichtung der Profilfläche 54 gedreht wird, so dass beim Schließen von Spannbacken der Spannvorrichtung 20 ein gleichmäßiges Spannen erfolgen kann. Darüber hinaus kann durch eine Längsverfahrbewegung der Zuführeinrichtung 28 ein Positionieren des Werkstücks 13 auf die Spannmitte der Spannvorrichtung 20 erfolgen.

## Patentansprüche

1. Verfahren zur Erfassung einer Profilfläche (54) eines Stangen- oder rohrförmigen Werkstücks (13), bei dem eine Beleuchtungseinrichtung (37) auf eine Profilfläche (54) einer Stirnseite (41) des Werkstücks (13) gerichtet wird, und bei dem der Stirnseite (41) des Werkstücks (13) eine Bilderfassungseinrichtung (38) zugeordnet wird, und eine von der Beleuchtungseinrichtung (37) ausgesandte Strahlung (42) in einem Einfallswinkel (α₁) auf die Profilfläche (54) der Stirnseite (41) des Werkstücks (13) auftrifft, **dadurch gekennzeichnet, dass** eine ringförmige Beleuchtungseinrichtung (37) koaxial zur Längsachse (47) des Werkstücks (13) positioniert wird und die gesamte Profilfläche (54) der Stirnseite (41) des Werkstücks (13) ausgeleuchtet wird und von einer an der Profilfläche (54) der Stirnseite (41) des Werkstücks (13) direkt reflektierten Strahlung (43) durch die Bilderfassungseinrichtung (38) ein Bild (53) erfasst und aus dem Bild (53) mit einem Auswerteverfahren ein Verlauf einer die Profilfläche (54) umrandenden Konturlinie (62, 63) ausgewertet wird.

2. Verfahren nach Anspruch 1, **dadurch gekennzeichnet,**
- **dass** die aus dem Bild (53) ermittelte, die Profilfläche (54) umrandende Konturlinie (62, 63) mit einem pattern-matching-Auswerteverfahren durch Vergleich mit einer Soll-Konturlinie ausgewertet wird und als Messdaten eine Position und/oder Winkellage und/oder Orientierung des Werkstücks (13) ermittelt werden, oder
- **dass** aus dem Bild (53) eine Istkontur der Profilfläche (54) ermittelt und durch Vergleich mit einer Sollkontur ausgewertet wird und als Messdaten die Wandstärke und/oder der Radius und/oder die Geradheit der Profilfläche (54) ermittelt werden.

3. Verfahren nach Anspruch 2, **dadurch gekennzeichnet, dass** die ermittelten Messdaten als neue Sollkonturdaten für nachfolgende Bearbeitungsschritte eines Bearbeitungsprogramms des Werkstücks (13) bereit gestellt und übernommen werden.

4. Verfahren nach Anspruch 1 bis 3, **dadurch gekennzeichnet, dass** eine optische Achse (48) der Bilderfassungseinrichtung (38) in einer Längsachse (47) des Werkstücks (13) positioniert wird und dass die Bilderfassungseinrichtung (38) in einem Abstand zur Stirnseite (41) des Werkstücks (13) positioniert wird, so dass die Stirnseite (41) des Werkstücks (13) innerhalb einer Apertur (46) der Bilderfassungseinrichtung (38) liegt.

5. Verfahren nach einem der vorhergehenden Ansprüche, **dadurch gekennzeichnet, dass** die Beleuchtungseinrichtung (37) eine ringförmige homogene Strahlung (42) erzeugt, welche mit einem Einfallswinkel (α₁) auf die Stirnseite (41) des Werkstücks (13) gerichtet wird, so dass der Ausfallswinkel (α₂) der direkt an der Stirnfläche (41) des Werkstücks (13) reflektierten Strahlung (43) innerhalb einer Apertur (46) der Bilderfassungseinrichtung (38) liegt.

6. Verfahren nach einem der vorhergehenden Ansprüche, **dadurch gekennzeichnet, dass** die Bilderfassungseinrichtung (38) das Bild (53) mit geringer Schärfentiefe erfasst.

7. Verfahren nach einem der vorhergehenden Ansprüche, **dadurch gekennzeichnet, dass** das Bild (53) von der Profilfläche (54) der Stirnseite (41) des Werkstücks (13) mittels einer Differenzmessung ermittelt wird, bei der ein Bild der Stirnseite des Werkstücks (13) mit und ohne Beleuchtung erzeugt und verglichen wird.

8. Verfahren nach einem der vorhergehenden Ansprüche, **dadurch gekennzeichnet, dass** die rotatorische Ausrichtung des Werkstücks (13) in einem Zuführelement (28) einer Zuführeinrichtung (14) einer Bearbeitungsmaschine (11) zur Bearbeitung des Werkstücks (13) aus der Konturenlinie (62, 63) der Profilfläche (54) bestimmt wird und dass bei einer Übergabe des Werkstücks (13) an eine Spannvorrichtung (20) der Bearbeitungsmaschine (11) die rotatorische Ausrichtung der Spannvorrichtung (20) mit einer Drehbewegung an die Ausrichtung des Werkstücks (13) angepasst wird.

9. Verfahren nach einem der vorhergehenden Ansprüche, **dadurch gekennzeichnet, dass** die axiale Ausrichtung des Werkstücks (13) in einer Übergabeposition (61) eines Zuführelementes (28) einer Zuführeinrichtung (14) einer Bearbeitungsmaschine (11) zur Bearbeitung des Werkstücks (13) zu einer Spannvorrichtung (20) der Bearbeitungsmaschine (11) aus der Konturlinie (x,y) der Profilfläche (54) bestimmt wird und dass eine lineare Verfahrbewegung des Zuführelementes (28) angesteuert wird, um das Werkstück (13) auf die Spannmitte der Spannvorrichtung (20) auszurichten.

10. Vorrichtung zur Erfassung einer Profilfläche (54) eines stangen- oder rohrförmigen Werkstücks (13), mit einer Beleuchtungseinrichtung (37), einer Bilderfassungseinrichtung (38) und einer Auswerteeinrichtung (101), **dadurch gekennzeichnet,**
**dass** eine ringförmige Beleuchtungseinrichtung (37) koaxial zur Längsachse des Werkstücks (13) ausgerichtet ist, dass sie eine Strahlung (42) mit einem Einfallswinkel (α₁) auf die Stirnseite (41) des Werkstücks (13) richtet und die gesamte Stirnfläche (41) ausleuchtet und eine von der Profilfläche (54) der Stirnfläche (41) des Werkstücks (13) direkt reflektierte Strahlung (43) in Richtung auf eine optische Achse (48) der Bilderfassungseinrichtung (38) gerichtet ist und die direkt reflektierte Strahlung (43) der Profilfläche (54) der Stirnseite (41) als Bild (53) von der Bilderfassungseinrichtung (38) erfassbar ist und dass die Auswerteeinrichtung (101) dazu ausgebildet ist, das aufgenommene Bild (53) der direkt reflektierten Strahlung (43) mit einem Auswerteverfahren zur Ermittlung einer die Profilfläche (54) umrandenden Konturlinie (62, 63) des Werkstücks (13) auszuwerten.

11. Vorrichtung nach Anspruch 10, **dadurch gekennzeichnet, dass** die Beleuchtungseinrichtung (37) als Beleuchtungsring ausgebildet ist, welcher mehrere in konzentrischen Ringen angeordnete Beleuchtungsquellen (39) aufweist und die Beleuchtungsquellen (39) der Beleuchtungseinrichtung (37) gegenüber einer optischen Achse (48) der Bilderfassungseinrichtung (38) auf diese zugeneigt sind.

12. Vorrichtung nach einem der Ansprüche 10 bis 11, **dadurch gekennzeichnet, dass** eine Längsachse (47) des Werkstücks (13), eine optische Achse (48) der Bilderfassungseinrichtung (38) und eine zentrale Strahlachse der Beleuchtungseinrichtung (37) in einer gemeinsamen Achse liegen.

13. Vorrichtung nach einem der Ansprüche 10 bis 12, **dadurch gekennzeichnet, dass** die Bilderfassungseinrichtung (38) eine Kamera und ein Kameraobjektiv umfasst, wobei im Kameraobjektiv Linsen angeordnet sind, die von einer Steuerung (100) gesteuert in Abhängigkeit vom Durchmesser des Werkstücks (13) in Richtung der optischen Achse (48) der Bilderfassungseinrichtung (38) bewegbar sind.

14. Vorrichtung nach einem der Ansprüche 10 bis 13, **dadurch gekennzeichnet, dass** die Bilderfassungseinrichtung (38) und die Beleuchtungseinrichtung (37) in einer optischen Schutzvorrichtung (45) angeordnet sind, welche eine Öffnung (34) für das Werkstück (13) aufweist.

15. Bearbeitungsmaschine (11) für Stangen- oder rohrförmige Werkstücke (13) mit einem Zuführelement (28) einer Zuführeinrichtung (14) zum Entnehmen eines Werkstücks (13) aus einer Entnahmeposition (58) in einer Beladeeinheit (26) und zum Übergeben des Werkstücks (13) in einer Übergabeposition (61) an eine Spannvorrichtung (20) der Bearbeitungsmaschine (11), durch welche das zu bearbeitende Werkstück (13) einer Bearbeitungsstation (12) der Bearbeitungsmaschine (11) zuführbar ist, **dadurch gekennzeichnet, dass** die Bearbeitungsmaschine (11) eine Vorrichtung nach einem der Ansprüche 10 bis 14 umfasst, und dass auf dem Weg der Verfahrbewegung des Zuführelementes (28) zwischen der Entnahmeposition (58) und der Übergabeposition (61) mit dieser Vorrichtung nach einem der Ansprüche 10 bis 14 eine Profilfläche (54) des Werkstücks (13) erfasst wird.

## Claims

1. A method for detecting a profile surface (54) of a rod-shaped or tubular workpiece (13), in which a lighting device (37) is directed on a profile surface (54) of an end face (41) of the workpiece (13) and in which an image capturing device (38) is associated with said end face (41) of the workpiece (13) and radiation (42) emitted from said lighting device (37) impinges on the profile surface (54) of the end face (41) of the workpiece (13) at a given angle of incidence (α₁), **characterised in that** an annular lighting device (37) is positioned coaxially with respect to the longitudinal axis (47) of the workpiece (13) so as to illuminate the entire profile surface (54) of the end face (41) of the workpiece (13), and an image (53) of radiation (43) reflected directly at the profile surface (54) of the end face (41) of the workpiece (13) is captured by the image capturing device (38), and based on said image (53) a shape of a contour line (62, 63) bordering said profile surface (54) is evaluated.

2. The method as claimed in claim 1, **characterised in**
- **that** the contour line (62, 63) bordering the profile surface (54) which has been determined from the image (53) is evaluated by comparing it to a desired reference contour line using a pattern matching evaluation method and a location and/or angular position and/or orientation of the workpiece (13) are determined in the form of measurement data, or
- **that** an actual contour of the profile surface (54) is determined from the image (53) and is evaluated by comparing it to a desired reference contour and the acquired measurement data refer to the wall thickness and/or the radius and/or the straigtness of the profile surface (54).

3. The method as claimed in claim 2, **characterised in that** the detected measurement data is provided and retained as new desired reference contour data for subsequent processing steps of a machining programme of the workpiece (13).

4. The method as claimed in claim 1 to 3, **characterised in that** an optical axis (48) of the image capturing device (38) is positioned in a longitudinal axis (47) of the workpiece (13) and **in that** the image capturing device (38) is positioned at a distance from the end face (41) of the workpiece (13) such that the end face (41) of the workpiece (13) is situated within an aperture (46) of the image capturing device (38).

5. The method as claimed in any of the preceding claims, **characterised in that** the lighting device (37) creates a homogeneous, annular type of radiation (42) which is directed onto the end face (41) of the workpiece (13) at an angle of incidence (α₁) selected in such a manner that the angle of reflection (α₂) of the radiation (43) reflected directly at the end face (41) of the workpiece (13) lies within the aperture (46) of the image capturing device (38).

6. The method as claimed in any of the preceding claims, **characterised in that** the image capturing device (38) captures the image (53) with a low depth of field.

7. The method as claimed in any of the preceding claims, **characterised in that** the image (53) of the profile surface (54) of the end face (41) of the workpiece (13) is determined via a differential measurement in the course of which an image of the end face of the workpiece (13) is created with lighting and without lighting, respectively, said images being subsequently compared.

8. The method as claimed in any of the preceding claims, **characterised in that** the rotatory orientation of the workpiece (13) within a feeding element (28) of a feeding device (14) of a processing machine (11) for prcessing the workpiece (13) is determined based on the contour line (62, 63) of the profile surface (54), and **in that**, when the workpiece (13) is transferred to a clamping device (20) of the processing machine (11), the rotatory orientation of said clamping device (20) is adjusted to the orientation of the workpiece (13) by means of a rotating movement.

9. The method as claimed in any of the preceding claims, **characterised in that** the axial orientation of the workpiece (13), when placed in a transfer position (61) of a feeding element (28) of a feeding device (14) of a processing machine (11) for processing the workpiece (13), with respect to a clamping device (20) of the processing machine (11) is determined based on the contour line (x,y) of the profile surface (54), and **in that** a linear movement of travel of the feeding element (28) is activated in order to align the workpiece (13) with respect to the clamping centre of the clamping device (20).

10. A device for detecting a profile surface (54) of a rod-shaped or tubular workpiece (13), having a lighting device (37), an image capturing device (38), and an evaluation device (101), **characterised in that** an annular lighting device (37) is aligned coaxially with respect to the longitudinal axis of the workpiece (13), that it directs radiation (42) onto the end face (41) of the workpiece (13) at an angle of incidence (α₁) so as to illuminate the entire end face (41), and radiation (43) reflected directly by the profile surface (54) of the end face (41) of the workpiece (13) is directed in the direction of an optical axis (48) of the image capturing device (38), and the radiation (43) reflected directly by the profile surface (54) of the end face (41) detectable as an image (53) by the image capturing device (38), and **in that** the evaluation device (101) is adapted to evaluate the image (53) taken of the directly reflected radiation (43) using an evaluation method capable of determining a contour line (62, 63) of the workpiece (13) bordering said profile surface (54).

11. The device as claimed in claim 10, **characterised in that** the lighting device (37) is realised in the form of a lighting ring having a plurality of lighting sources (39) arranged in concentric rings and **in that**, with respect to an optical axis (48) of the image capturing device (38), said lighting sources (39) of the lighting device (37) are inclined toward said axis.

12. The device as claimed in any one of claims 10 to 11, **characterised in that** a longitudinal axis (47) of the workpiece (13), an optical axis (48) of the image capturing device (38), and a central radiation axis of the lighting device (37) lie in a common axis.

13. The device as claimed in any one of claims 10 to 12, **characterised in that** the image capturing device (38) comprises a camera and a camera objective, said camera objective having lenses arranged therein which are controlled by a control unit (100) so as to be movable in the direction of the optical axis (48) of the image capturing device (38), depending on the diameter of the workpiece (13).

14. The device as claimed in any one of claims 10 to 13, **characterised in that** the image capturing device (38) and the lighting device (37) are disposed within an optical protection device (45) which has an opening (34) for accommodating the workpiece (13) .

15. A processing machine (11) for rod-shaped or tubular workpieces (13), having a feeding element (28) of a feeding device (14) for removing a workpiece (13) from a removal position (58) at a loading unit (26) and for transferring said workpiece (13), in a transfer position (61), to a clamping device (20) of the processing machine (11) by which the workpiece (13) that is to undergo processing may be fed to a processing station (12) of the processing machine (11), **characterised in that** the processing machine (11) comprises a device as claimed in any one of claims 10 to 14 and **in that** in the course of the movement of travel of the feeding element (28) between the removal position (58) and the transfer position (61), said device as claimed in any one of claims 10 to 14 is used to detect a profile surface (54) of the workpiece (13).

## Revendications

1. Procédé destiné à saisir une surface profilée (54) d'une pièce à usiner (13) en forme de tige ou de tube, lors duquel un dispositif d'éclairage (37) est dirigé sur une surface profilée (54) d'une face frontale (41) de la pièce à usiner (13), et lors duquel un dispositif de saisie d'images (38) est affecté à ladite face frontale (41) de la pièce à usiner (13) et un rayonnement (42) émis par le dispositif d'éclairage (37) frappe la surface profilée (54) de la face frontale (41) de la pièce à usiner (13) selon un angle d'incidence donné (α₁), **caractérisé en ce qu'**un dispositif d'éclairage (37) annulaire est positionné de manière coaxiale à l'axe longitudinal (47) de la pièce à usiner (13) et que toute la surface profilée (54) de la face frontale (41) de la pièce à usiner (13) est éclairée et une image (53) d'un rayonnement (43) réfléchi directement sur la surface profilée (54) de la face frontale (41) de la pièce à usiner (13) est saisie par le dispositif de saisie d'images (38) et un tracé d'une ligne de contour (62, 63) qui entoure la surface profilée (54) est évalué à partir de ladite image (53) grâce à un procédé d'évaluation.

2. Procédé selon la revendication 1, **caractérisé en ce**
- **que** la ligne de contour (62, 63) entourant la surface profilée (54) et déterminée à partir de l'image (53) est évaluée grâce à un procédé d'évaluation par filtrage par motif, et ce par comparaison avec une ligne de contour théorique, et en ce qu'une position et/ou position angulaire et/ou orientation de la pièce à usiner (13) sont déterminées en tant que données de mesure, ou
- **qu'**à partir de l'image (53) est déterminé un contour réel de la surface profilée (54), lequel est évalué par comparaison avec un contour théorique, et en ce qu'une épaisseur de paroi et/ou le rayon et/ou la rectitude de la surface profilée (54) sont déterminés en tant que données de mesure.

3. Procédé selon la revendication 2, **caractérisé en ce que** les données de mesure déterminées sont fournies en tant que nouvelles données de contour théoriques et reprises pour des étapes d'usinage suivantes d'un programme d'usinage de la pièce à usiner (13).

4. Procédé selon l'une quelconque des revendications 1 à 3, **caractérisé en ce qu'**un axe optique (48) du dispositif de saisie d'images (38) est positionné dans un axe longitudinal (47) de la pièce à usiner (13) et que le dispositif de saisie d'images (38) est positionné selon un espacement tel par rapport à la face frontale (41) de la pièce à usiner (13) que la face frontale (41) de la pièce à usiner (13) se situe à l'intérieur d'une ouverture (46) du dispositif de saisie d'images (38).

5. Procédé selon l'une quelconque des revendications précédentes, **caractérisé en ce que** le dispositif d'éclairage (37) produit un rayonnement (42) annulaire homogène qui est dirigé sur la face frontale (41) de la pièce à usiner (13) selon un angle d'incidence (α₁) tel que l'angle de réflexion (α₂) du rayonnement (43) qui est directement réfléchi sur ladite face frontale (41) de la pièce à usiner (13) se situe à l'intérieur d'une ouverture (46) du dispositif de saisie d'images (38).

6. Procédé selon l'une quelconque des revendications précédentes, **caractérisé en ce que** le dispositif de saisie d'images (38) saisit l'image (53) avec une faible profondeur de champ.

7. Procédé selon l'une quelconque des revendications précédentes, **caractérisé en ce que** l'image (53) de la surface profilée (54) de la face frontale (41) de la pièce à usiner (13) est déterminée au moyen d'une mesure différentielle lors de laquelle une image de la face frontale de la pièce à usiner (13) est générée respectivement avec et sans éclairage et les deux sont comparées entre elles.

8. Procédé selon l'une quelconque des revendications précédentes, **caractérisé en ce que** l'orientation rotatoire de la pièce à usiner (13) dans un élément d'amenage (28) d'un dispositif d'amenage (14) d'une machine d'usinage (11) destinée à usiner la pièce à usiner (13) est déterminée à partir de la ligne de contour (62, 63) de la surface profilée (54), et **en ce que**, lors d'un transfert de la pièce à usiner (13) vers un dispositif de serrage (20) de la machine à usiner (11), l'orientation rotatoire du dispositif de serrage (20) est adaptée, grâce à un mouvement de rotation, à l'orientation de la pièce à usiner (13).

9. Procédé selon l'une quelconque des revendications précédentes, **caractérisé en ce que**, lorsqu'un élément d'amenage (28) d'un dispositif d'amenage (14) d'une machine d'usinage (11) destinée à usiner la pièce à usiner (13) se trouve dans une position de transfert (61) par rapport à un dispositif de serrage (20) de ladite machine d'usinage (11), l'orientation axiale de la pièce à usiner (13) est déterminée à partir de la ligne de contour (x, y) de la surface profilée (54), et **en ce qu'**un mouvement de déplacement linéaire de l'élément d'amenage (28) est activé afin d'orienter la pièce à usiner (13) par rapport au centre de serrage du dispositif de serrage (20).

10. Dispositif destiné à saisir une surface profilée (54) d'une pièce à usiner (13) en forme de tige ou de tube, pourvu d'un dispositif d'éclairage (37), d'un dispositif de saisie d'images (38) et d'un dispositif d'évaluation (101), **caractérisé en ce qu'**un dispositif d'éclairage (37) annulaire est orienté de manière coaxiale à l'axe longitudinal de la pièce à usiner (13) et qu'il dirige un rayonnement (42) sur la face frontale (41) de la pièce à usiner (13) selon un angle d'incidence donné (α₁) et éclaire toute la face frontale (41), et un rayonnement (43) réfléchi directement par la surface profilée (54) de la face frontale (41) de la pièce à usiner (13) est dirigé en direction d'un axe optique (48) du dispositif de saisie d'images (38) et le rayonnement (43) directement réfléchi par la surface profilée (54) de la face frontale (41) peut être saisi par le dispositif de saisie d'images (38) en tant qu'image (53), et **en ce que** le dispositif d'évaluation (101) est conçu pour évaluer l'image (53) ainsi prise du rayonnement (43) réfléchi de manière directe grâce à un procédé d'évaluation destiné à déterminer une ligne de contour (62, 63) de la pièce à usiner (13) qui entoure la surface profilée (54).

11. Dispositif selon la revendication 10, **caractérisé en ce que** le dispositif d'éclairage (37) est réalisé en tant qu'anneau d'éclairage, lequel présente plusieurs sources d'éclairage (39) disposées en cercles concentriques et que lesdites sources d'éclairage (39) du dispositif d'éclairage (37) sont inclinées par rapport à un axe optique (48) du dispositif de saisie d'images (38), et ce vers celui-ci.

12. Dispositif selon l'une quelconque des revendications 10 à 11, **caractérisé en ce qu'**un axe longitudinal (47) de la pièce à usiner (13), un axe optique (48) du dispositif de saisie d'images (38) et un axe de faisceau central du dispositif d'éclairage (37) se situent dans un axe commun.

13. Dispositif selon l'une quelconque des revendications 10 à 12, **caractérisé en ce que** le dispositif de saisie d'images (38) comprend une caméra et un objectif de caméra, dans l'objectif de caméra étant disposées des lentilles qui, commandées par une commande (100), peuvent être déplacées en direction de l'axe optique (48) du dispositif de saisie d'images (38), et ce en fonction du diamètre de la pièce à usiner (13).

14. Dispositif selon l'une quelconque des revendications 10 à 13, **caractérisé en ce que** le dispositif de saisie d'images (38) et le dispositif d'éclairage (37) sont disposés dans un dispositif de protection optique (45) qui présente une ouverture (34) pour la pièce à usiner (13).

15. Machine d'usinage (11) pour pièces à usiner (13) en forme de tige ou de tube, pourvue d'un élément d'amenage (28) d'un dispositif d'amenage (14) destiné à prélever une pièce à usiner (13) à partir d'une position de prélèvement (58) au niveau d'une unité de chargement (26) et destiné à transférer ladite pièce à usiner (13) se trouvant dans une position de transfert (61) vers un dispositif de serrage (20) de la machine d'usinage (11), grâce auquel la pièce (13) qui doit être usinée peut être amenée à une station d'usinage (12) de la machine d'usinage (11), **caractérisée en ce que** ladite machine d'usinage (11) comprend un dispositif selon l'une quelconque des revendications 10 à 14 et que sur le trajet emprunté par l'élément d'amenage (28) lors de son déplacement entre la position de prélèvement (58) et la position de transfert (61), une surface profilée (54) de la pièce à usiner (13) est saisie grâce audit dispositif selon l'une quelconque des revendications 10 à 14.
